# EUROPEAN PATENT APPLICATION

(11) **EP 2 658 272 A1**
(43) Date of publication of application: **30.10.2013**
(21) Application number: 13158599.4
(22) Date of filing: 11.03.2013
(51) Int. Cl.: H04N 21/422, H04N 21/4223, H04N 21/854, H04N 21/45, G11B 27/10

(54) **System and Method for dynamic content modification based on user reaction**

(30) Priority: 23.04.2012 US 201261636855 P; 02.06.2012 US 201213527903
(71) Applicant: Sony Mobile Communications AB, 221 88 Lund (SE)
(72) Inventor: Jonsson, Håkan, 245 65 Hjärup (SE); Aronsson, Pär-Anders, 214 24 Malmö (SE); de Léon, David, 225 47 Lund (SE); Klinghult, Gunnar, 223 59 Lund (SE); Thörn, Ola, 216 12 Limhamn (SE)
(74) Representative: Aurell, Henrik

(57) **Abstract**

A dynamic content modification system (20) dynamically modifies content playback based on a user reaction so as to provide an individualized entertainment experience. The system includes a sensor module (30) configured to receive a plurality of sensor measurements of at least one user, and a user model database (60) including a plurality of user models associated with content preferences. A controller (22) is configured to receive the sensor measurements and apply the sensor measurements to at least one user model to determine a prediction of a user reaction to content. The controller further is configured to determine a content modification to a playback of the content based on the prediction, and to a cause a content reproduction device (14) to play back the content in a manner that incorporates the determined content modification.

## Description

### TECHNICAL FIELD OF THE INVENTION

The technology of the present disclosure relates generally to audiovisual entertainment systems, and more particularly to a system and methods for dynamic video content modification based on user reactions.

### DESCRIPTION OF THE RELATED ART

The variety and depth of audiovisual entertainment systems has expanded substantially in recent years. High definition video, full surround sound, and other advances in video and audio technology have provided users a theater-like experience in the home.

Certain forms of audiovisual entertainment may be inherently user-centric, with the experience being tailored automatically for each user. For example, video games in particular tend to adapt to the user's manner of progress through the game. Video and audio content will change based on the user's actions within the game, resulting in each user having an individualized experience. Such individualized experience enhances the entertainment value.

Certain other forms of audiovisual entertainment, however, tend to be substantially fixed in nature at the conclusion of production. Movies and television shows, for example, currently are not significantly alterable while being watched. As such, all users tend to experience the same or substantially similar content, and without an individualized experience the enjoyment of such audiovisual entertainment can be limited.

Audiovisual entertainment, such as movies, television shows, user produced content, and the like, can be obtained in a variety of means. For example, content can be obtained from traditional broadcast and cable networks, or streamed from pay-per-view or subscription services. Accessing content is not limited to traditional viewing devices, such as televisions in the home or computer devices, but also may be obtained by a variety of mobile devices such as mobile telephones and other portable media playing devices. Audiovisual content also may be played back from a storage medium, such as a DVD, Blu-ray disc (BD), hard drive disc of digital video recorder (DVR), and the like.

As referenced above, certain forms of audiovisual entertainment, such as movies and television shows for example, are substantially fixed and provide a relatively uniform viewing experience to all viewers. Content providers, however, have provided a variety of limited mechanisms for adjusting or modifying the viewing experience. For example, viewers can fast-forward through undesirable scenes, or rewind to and replay highly enjoyable scenes. Content providers commonly provide a "scene selection" feature, particularly for relatively lengthy content such as movies, which permit a user to select and jump to a particularly desired scene. Certain content media, such as DVDs and BDs in particular, may have a "special features" or "bonus features" section. Such features may provide additional content associated with the main content, such as deleted scenes, commentary, alternative versions of the content or portions of the content (e.g., a "director's cut" or an alternative ending), and the like. These features provide certain selections for minor modifications of the otherwise fixed content, which can provide somewhat of an improvement to the viewing experience.

The above features for altering content, however, are deficient in that they do not provide a truly individualized, enhanced viewing experience. The extent of the modifications to the main content is relatively minor. In addition, the scope of the modifications and enhancements is essentially fixed by the content provider. Accordingly, users essentially are selecting from a fixed and finite set of content provider enhancements. Such enhancements, therefore, are not tailored to individual users. In addition, the above features are for the most part highly manual. A user must select a modification, enhancement, or additional features, which reduces the overall effectiveness in improving the viewing experience. Accordingly, conventional features for modifying substantially fixed audiovisual content, and movies and television shows in particular, are deficient in not providing a truly individualized and enhanced viewing experience.

### SUMMARY

To improve the consumer experience with audiovisual entertainment, there is a need in the art for an improved system and method for modifying audiovisual content for providing an individualized and enhanced viewing experience. The system described herein overcomes the deficiencies of conventional systems by providing a system and methods for dynamic modification of audiovisual content based on user reactions.

Accordingly, an aspect of the invention is a dynamic content modification system for dynamically modifying content playback based on a user reaction. The the system includes a sensor module configured to receive a plurality of sensor measurements of at least one user, a user model database including a plurality of user models associated with content preferences, and a controller. The controller is configured to receive the sensor measurements and apply the sensor measurements to at least one user model to determine a prediction of a user reaction to content. The controller is configured to determine a content modification to a playback of the content based on the prediction.

According to an embodiment of the dynamic content modification system, the controller is further configured to a cause a content reproduction device to play back the content in a manner that incorporates the determined content modification.

According to an embodiment of the dynamic content modification system, the sensor module comprises a plurality of sensor devices.

According to an embodiment of the dynamic content modification system, the plurality of sensor devices includes at least one of a face detection camera, a motion sensor, and a photoplethysmography measuring system.

According to an embodiment of the dynamic content modification system, the plurality of sensor devices includes at least one of a headset worn by the user, a probe sensor worn by the user, and a remote control device operated by the user.

According to an embodiment of the dynamic content modification system, the probe sensor includes at least one of a photoplethysmography measuring system and a galvanic skin response measuring sensor.

According to an embodiment of the dynamic content modification system, the sensor module further comprises a wireless interface, and the controller receives the sensor measurements via the wireless interface.

According to an embodiment of the dynamic content modification system, the at least one user is a plurality of users, and the sensor module is configured to distinguish sensor measurements associated with each respective user. The controller is configured to receive the sensor measurements for each respective user and apply the sensor measurements to a corresponding user model for each respective user to determine a prediction of a reaction to content for each respective user. The controller is configured to determine a content modification to a playback of the content based on one or more of the user predictions.

According to an embodiment of the dynamic content modification system, the user model data base contains at least one of an individual model that is specific to a corresponding individual user, and a default model that is not specific to a corresponding individual user.

According to an embodiment of the dynamic content modification system, the individual model includes a user profile for the corresponding individual user.

According to an embodiment of the dynamic content modification system, the individual model is generated automatically based on a learning process utilizing a usage history of a plurality default models.

According to an embodiment of the dynamic content modification system, the controller is configured to determine the content modification based on information contained in a media file associated with the content.

According to an embodiment of the dynamic content modification system, the controller is configured to determine the content modification based on information contained in metadata of the media file associated with the content.

According to an embodiment of the dynamic content modification system, the system further includes a wireless interface and a server storing the user model database. The controller is configured to apply the sensor measurements to the at least one user model by accessing the at least one user model from the server over the wireless interface.

According to an embodiment of the dynamic content modification system, the controller is configured to determine the content modification based on information contained in metadata of a media file associated with the content, the server includes a metadata database containing the content modification information, and the controller is configured to determine the content modification by accessing the metadata database from the server over the wireless interface.

According to an embodiment of the dynamic content modification system, the system further includes a wireless interface, and a server storing the user model database and including a server controller. The server controller is configured to receive the sensor measurements over the wireless interface and apply the sensor measurements to at least one user model to determine the a prediction of a user reaction to content. The server controller is configured to determine a content modification to a playback of the content based on the prediction and to transmit the determined content modification to the controller over the wireless interface. The controller is further configured to a cause a content playback device to play back the content in a manner that incorporates the determined content modification.

Another aspect of the invention is a content reproduction system including the described content modification system and a content reproduction device. The controller is further configured to a cause the content reproduction device to play back the content in a manner that incorporates the determined content modification.

Another aspect of the invention is a method of dynamically modifying content playback based on a user reaction. The method includes the steps of receiving a plurality of sensor measurements of at least one user, applying the sensor measurements to at least one user model to determine a prediction of a user reaction to content, and determining a content modification to a playback of the content based on the prediction.

According the one embodiment of the method, the method further includes causing a content reproduction device to play back the content in a manner that incorporates the determined content modification.

According to one embodiment of the method, the method the at least one user is a plurality of users. The method further includes receiving the plurality of sensor measurements from the plurality of users, distinguishing sensor measurements associated with each respective user, applying the sensor measurements of each respective user to a corresponding user model for each respective user to determine a prediction of a reaction to content for each respective user, and determining a content modification to a playback of the content based on one or more of the user predictions.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the claims appended hereto.

Features that are described and/or illustrated with respect to one embodiment may be used in the same way or in a similar way in one or more other embodiments and/or in combination with or instead of the features of the other embodiments.

It should be emphasized that the terms "comprises" and "comprising," when used in this specification, are taken to specify the presence of stated features, integers, steps or components but do not preclude the presence or addition of one or more other features, integers, steps, components or groups thereof.

### BRIEF DESCRIPTION OF THE DRAWINGS

FIG. 1 is a schematic flow chart diagram depicting an overview of an exemplary method of dynamically modifying audiovisual content based on user reactions.
FIG. 2 is a schematic diagram depicting an exemplary home entertainment system in accordance with embodiments of the present invention.
FIG. 3 is a schematic block diagram depicting operative portions of an exemplary dynamic content modification system in accordance with embodiments of the present invention.
FIG. 4 is a schematic block diagram depicting operative portions of an exemplary sensor module in accordance with embodiments of the present invention.
FIG. 5A is a schematic diagram depicting exemplary individual model entries, and FIG. 5B is a schematic diagram depicting exemplary default model entries, of a user model database in accordance with embodiments of the present invention.
FIG. 6 is a schematic block diagram that represents portions of an exemplary media file in accordance with embodiments of the present invention.
FIG. 7 is a schematic block diagram depicting exemplary metadata representing content modification instructions in accordance with embodiments of the present invention.
FIG. 8 is a schematic diagram of a communications system in which the dynamic content modification system may operate.
FIG. 9 is a schematic block diagram depicting operative portions of an exemplary content modification server in accordance with embodiments of the present invention.

### DETAILED DESCRIPTION OF EMBODIMENTS

The system described herein overcomes the deficiencies of conventional systems by providing a system and methods for dynamic modification of audiovisual content based on user reactions.

Components of the system generally include the following components, which are described in more detail below. A sensor module detects various sensor measurements from a user than can be indicative of a user emotional state in reaction to viewed content, which can include a variety of physical parameters such as facial expressions and features, heart rate, blood pressure, pupil size etc. A controller or processing device is configured to receive the various sensor inputs, and determines the state or emotional condition of the user in reaction to the viewed content. For example, a combination of high heart rate, high blood pressure, and small pupil size may be associated with an excited state, whereas the reverse may be associated with a relaxed or even bored state. The sensor module also may include face recognition features, which in addition to emotional state determination, can be employed to determine a user identity (and thus such user features as age and gender).

Based on the determination of the user emotional state in reaction to viewed content, the controller or processing device is configured to predict whether a user will react favorably versus unfavorably to upcoming content. The prediction occurs as follows. The controller applies the emotional state determination based on data of the sensor inputs to one or more user models. Each model constitutes a database of entries that relate the user emotional reaction to user preferences so as to permit a prediction of a user reaction to upcoming content. For frequent users, the user models each may be individualized to particular users. For example, in a home a father, mother, and each child may be associated with his or her own individual model. For relatively infrequent users, such as a house guest, a default model may be employed based on more generalized default associations between emotional states and likely user reactions to upcoming content.

Once a user reaction to upcoming content is predicted, the controller or processing device accesses the audiovisual content so as to determine a modification to the audiovisual content. For example, associations between a user state or condition and a content modification may be stored in the metadata of the audiovisual content. For example, if a prediction is made that a user is favorably excited about a scene, the metadata may include an associated modification entry to extend the scene. If, however, a prediction is made that a scene would be inappropriate to a user (such as based on the user age), the metadata may include an associated modification entry to delete the scene. More details concerning the modification selection process are described below. Once a modification is determined, the controller or processing device causes the modification to be applied to the audiovisual content to provide a viewing experience that is individualized to the user based on the user reaction to content.

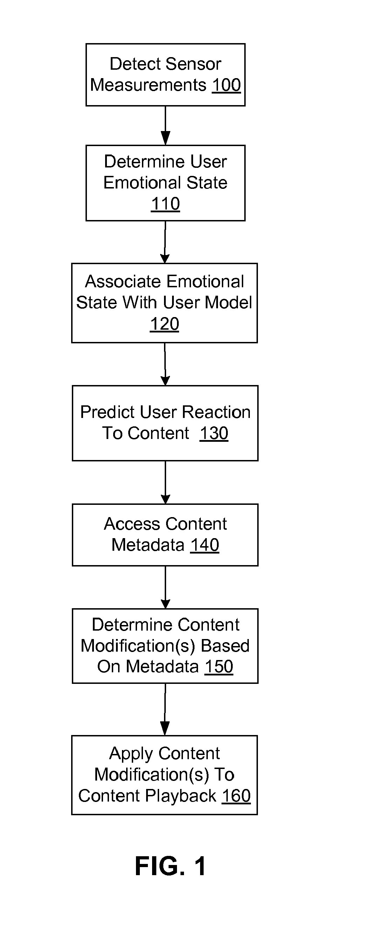

In accordance with the above general description, FIG. 1 depicts an overview of an exemplary method of dynamically modifying audiovisual content based on user reactions. The method of FIG. 1 represents a general overview, and each step is described in more detail below in connection with the description of the associated components of the system. Although the exemplary method is described as a specific order of executing functional logic steps, the order of executing the steps may be changed relative to the order described. Also, two or more steps described in succession may be executed concurrently or with partial concurrence. It is understood that all such variations are within the scope of the present invention.

The method overview may begin at step 100, at which a sensor module detects a plurality of user sensory measurements. At step 110, a controller determines a user emotional state based on an analysis of such sensory measurements. At step 120, the controller associates the determined user emotional state with a user model. At step 130, the controller predicts a user reaction to upcoming content based on the determined user emotional state as applied to the appropriate user model. At step 140, the controller accesses the metadata of the audiovisual content being modified, wherein the metadata includes correspondences between user states and predictions, and content modifications. At step 150, the controller determines a content modification(s) based on the metadata, and at step 160, the controller causes the content modification(s) to be applied to the audiovisual content playback. In this manner, the audiovisual content is dynamically modified based on user reactions to the content so as to provide a highly individualized user viewing experience.

As stated above, the method of FIG. 1 represents an overview of an exemplary dynamic content modification process, with the steps being described in more detail below in connection with the description of the associated components of the system. Embodiments of the present invention will now be described with reference to the additional drawings, wherein like reference numerals are used to refer to like elements throughout. It will be understood that the figures are not necessarily to scale.

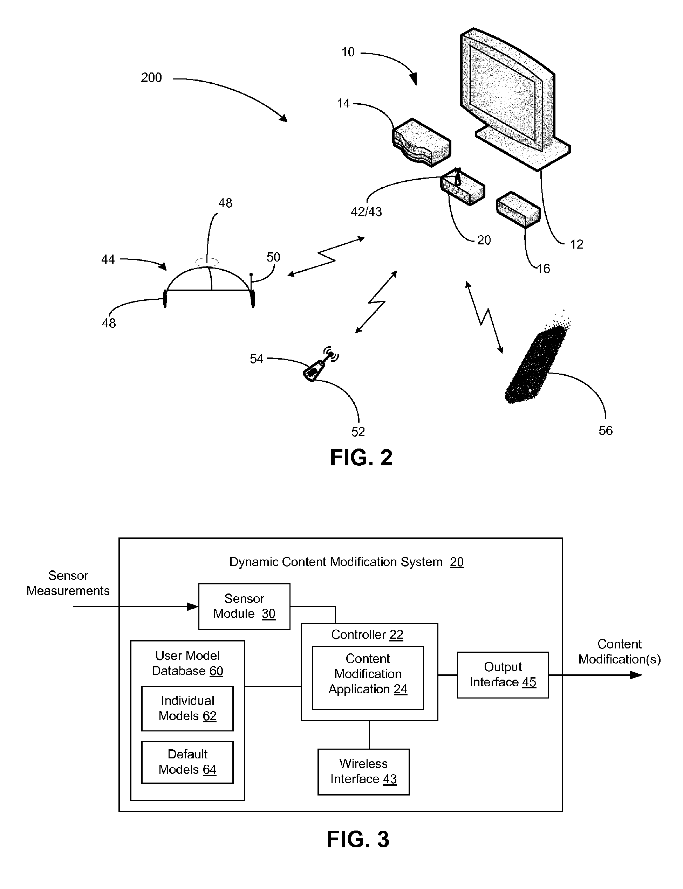

FIG. 2 is a schematic diagram depicting an exemplary home entertainment system 200 in accordance with embodiments of the present invention. The exemplary home entertainment system may include a content reproducing system 10 that includes a display device 12, such as a television or like device, an optical disc player 14 (e.g., CD, DVD, and/or BD disc player), and a broadcast receiver 16 (e.g., cable box, satellite box, antenna and receiver, etc.). The broadcast receiver may include a DVR function for storing broadcast content to a hard drive or hard disc for future playback. It will be appreciated that the precise components of the content reproducing system 10 may be varied extensively. For example, the system may include any additional or alternative audiovisual components such as gaming devices or consoles, audio surround systems, video projection systems, music player docks, and so on. Such devices may be stand-alone devices or functionally incorporated into one or more of the components depicted in FIG. 2.

As also depicted in FIG. 2, the home entertainment system further may include a dynamic content modification system 20 (referred to sometimes in short form as modification system 20). FIG. 3 is a schematic block diagram more specifically depicting operative portions of the content modification system 20 in accordance with embodiments of the present invention. As depicted in FIG. 3, content modification system 20 may include a controller 22 that is configured to carry out overall control of the functions and operations of the modification system 20. The controller 22 may include a processing device such as a CPU, microcontroller or microprocessor. To implement the features of the present invention, the controller 22 may be configured to execute program code embodied as a content modification application 24. It will be apparent to a person having ordinary skill in the art of computer programming, and specifically in application programming audiovisual content devices, mobile telephones or other like electronic devices, how to program an electronic device to operate and carry out logical functions associated with the modification system 20. Accordingly, details as to specific programming code have been left out for the sake of brevity. Also, controller functionality could be carried out via dedicated hardware, firmware, software, or any combinations thereof, without departing from the scope of the invention.

As further depicted in FIG. 3, the modification system 20 also includes a sensor module 30 and a user model database 60. These features are described in detail below. It will be appreciated that although the controller 22, sensor module 30, and model database 60 are depicted as being stored in a single component, one or more of them may be stand-alone components or may be incorporated into one or more other components of the system.

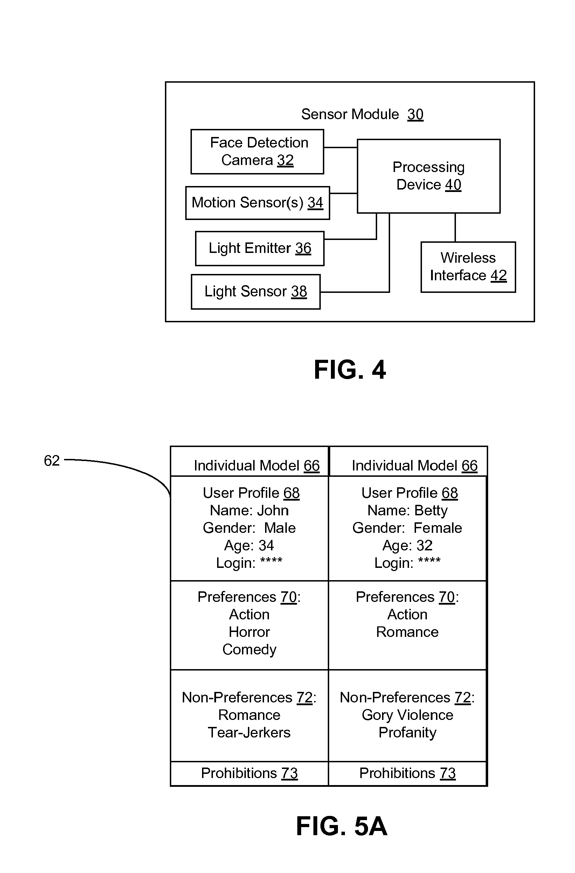

FIG. 4 is a schematic block diagram depicting operative portions of the sensor module 30 in accordance with embodiments of the present invention. In general, the sensor module is configured to receive a plurality of sensor measurements from a user, and includes a plurality of sensor devices that monitor the physical states of one or more users while such users are viewing the audiovisual content. As further explained below, the sensor measurements are then be employed to determine a user's emotional state or condition as the user is watching the contemporaneous portion of the content. The sensor measurements may be used to determine whether a user is reacting favorably or unfavorably to the scene being depicted. In this vein, the sensor measurements may be indicative of a user's emotional state or condition as the user is watching the audiovisual content, such as whether the user is happy versus sad, excited versus bored, attentive versus distracted, engaged versus irritated or angry, aroused versus repulsed, and so on.

As depicted in FIG. 4, the sensor module may include a plurality of internal sensing devices (e.g., 32, 34, 36, and 38), a processing device 40, and a wireless interface 42. The processing device 40 may be a separate processing device or incorporated as part of the controller 22 referenced above.

In exemplary embodiments, one of the internal sensing devices as depicted in FIG. 4 (e.g., sensing device 32), may be a face detection camera. As are known in the art, the face detection camera 32 may be a digital camera for generating a digital still and/or video images (and preferably both) of the face of a user. In this manner, the face detection camera 32 may detect facial features and facial movements that would be associated with particular states or emotions of the user. For example, the face detection camera 32 can detect whether the eyes are closed, such as when one is sleeping, versus wide open as may occur when one is excited or afraid. In this vein, the face detection camera 32 can detect pupil size, the variations of which also may be associated with different emotional states. Similarly, tearing can be detected, which would be associated with sadness or strong emotion. Other facial features can be detected. For example, in exemplary embodiments the face detection camera 32 can detect if a person is smiling versus frowning, and whether any such smiling is in combination with broader facial movement as may occur while laughing. Yawning can be detected, which may be associated with boredom. Perspiration also can be detected, which may be associated with fear, excitement, or arousal. Facial expression detection can be performed, wherein facial expressions can be associated with various emotions such as enjoyment, irritation, sadness, anger, etc.

In exemplary embodiments, the face detection camera 32 may be a camera array of a plurality of cameras, wherein each camera of the array is dedicated to a particular portion or aspect of face detection. For example, a more precise camera may be dedicated to pupil detection versus a camera dedicated to detecting broader facial features and movements. In another embodiment, the face detection camera 32 may be more broadly configured to perform body detection. For example, such a camera can detect whether a person is in a huddled position (such as may occur when one is afraid), vigorously moving (such as may occur in connection with strong laughter), or lying down (such as may occur when one is tired and bored).

Referring again to FIG. 4, the plurality of internal sensing devices of the sensor module 30 further may include one or more a motion sensors (e.g., sensor 34). Similar to a body detection camera as described above, a motion sensor 34 may be used to detect more gross body movements of the user, which would then be associated with particular emotional states of user. Relatedly, an infrared sensor may be employed from which body temperature can be determined.

The plurality of sensing devices of the sensor module 30 further may include a light emitter and a corresponding light sensor (e.g., respectively sensors 36 and 38). The light sensor 38 may be configured as another digital camera. As is known in art, a process known as photoplethysmography may be employed to determine cardiovascular vital statistics in a non-invasive manner. In such a process, a light source or light emitter is configured to emit light of a wavelength suitable for detecting blood flow. The light is emitted toward a body tissue, and light transmitted in turn from the body tissue is detected and analyzed as a series of images of the living tissue as captured by the light sensor or camera. By analyzing the images obtained based on how the tissue absorbs, reflects, and/or transmits the light received from the light emitter, vital statics can be determined. For example, photoplethysmography may be employed to determine heart rate and blood pressure, which can vary based on differing emotion states of the user.

In accordance with such features, the light emitter 36 and light sensor/camera 38 may be part of a photoplethysmography system that detects blood flow through a particular body part of the user, such as through the major arteries of a user's neck. In particular, the light emitter 36 may emit a light pulse, and the light sensor/camera 38 may generate blood flow images of the appropriate artery. The processing device 40 of the sensor module 30 may perform the photoplethysmography analysis to determine heart rate and blood pressure from the images obtained by the camera 38. Relatedly, the photoplethysmography components may include a long wave infrared sensor from which body temperature can be determined.

Referring again to Figs. 2 and 4, the sensor module 30 further may include a wireless interface 42. The wireless interface 42 may be any suitable wireless interface, and preferably includes a short range wireless interface such as a Bluetooth, infrared, Near Field Communication (NFC) device, or like interface for wirelessly communicating with the sensor module 30 over a short range interface. The wireless interface 42 is configured to receive sensor measurements from a plurality of external sensing devices, such as sensing devices 44, and 52, and 56.

As seen in FIG. 2, as part of an enhanced viewing experience, such as with a three-dimensional television, enhanced surround sound systems, or virtual reality systems, a user may wear a headset or an eyeglasses-like device. Headset or eyeglass devices provide the enhanced visual and audio effects of such systems. In exemplary embodiments of the present invention, an external sensing device (e.g., sensing device 44) is a headset device. The headset 44 may include one or more biosignal detectors 48 and a headset wireless interface 50. For example, being worn about the user's head, the biosignal detectors 48 can detect the electroencephalogram (EEG) the user. EEG signals may then be transmitted from the headset wireless interface 50 of the headset 44 to the wireless interface 42 of the sensor module 30. Variations in EEG signals also can be associated with varying emotional states of a user.

Another external sensing device (e.g., sensing device 52) may be a probe 52. Such probes typically can be worn on the user's finger and may include a light emitter and light sensor suitable for taking photoplethysmography measurements comparably as referenced above. Photoplethysmography measurements may then be transmitted from the probe 52 wirelessly to the wireless interface 42 of the sensor module 30. As described above, the processing device 40 of the sensor module 30 may perform a photoplethysmography analysis to determine such parameters as heart rate and blood pressure from the referenced measurements. In exemplary embodiments, the probe 52 may include galvanic skin response (GSR) measurement sensor 54. GSR measurements measure changes in the electrical conductivity about the surface of the skin, particularly caused by varying degrees of perspiration. As referenced above, the degree of perspiration also may vary with different emotional states.

The use of sensing devices worn by the user has certain drawbacks in terms of adding potential discomfort to the user. On the other hand, particularly as to the measurement of biological parameters like blood flow and electrical biosignals, measurements are improved when the sensing devices are adjacent to the appropriate body parts. The use of worn sensing devices versus sensing devices incorporated into a more remote electronic device can represent a balance between user comfort and efficient measurement processes. Accordingly, it will be appreciated that the above configuration of sensing devices represents an example, and the precise number, nature, and configuration of the sensing devices may be varied substantially. In this vein more broadly, other suitable additional or alternative sensing devices, and combinations thereof, may be employed.

Another external sensing device (e.g., sensing device 56) may be a user input device, such as a remote control or like device. User inputs to the remote control 56 also may be indicative of a user's emotional reaction with respect to a portion of audiovisual content. For example, if a user routinely fast-forwards through a particular scene or category of scene, such an input may be indicative that the particular type of scene is disfavored. Conversely, if a user repeatedly plays back a particular scene or category of scene, such an input may be indicative that the particular type of scene is favored. In such manner, user inputs to an input device such as remote control device 56 also may be considered in determining a user's emotional state while watching audiovisual content.

In certain situations, there may be multiple viewers and it is desirable to distinguish the sensor measurements for each particular viewer. The processing device 40 of sensor module 30, therefore, may be configured to distinguish which sensor measurements pertain to which respective viewer. These viewer groupings become part of the sensor measurements being gathered by sensor module 30. In exemplary embodiments, therefore, the face detection capabilities may include determining a user identity. As further described below, frequent users, such as family members within a household, may be associated with user models particular to each respective user. Accordingly, sensor measurements may be associated with a recognized identity. Even when an identity is not recognized as to a particular group of sensor measurements, such sensor measurements still may be grouped as to a corresponding viewer and denoted by an unspecified or "guest" identity that would be associated with a particular grouping of sensor measurements for a particular viewer.

Referring back to FIG. 3, as referenced above the content modification system 20 includes the controller 22. The sensor module 30, including the various sensing devices described above, gathers the various sensor measurements and groups them by respective viewer if there is more than one user. The controller is configured to receive the various sensor measurements as part of executing the content modification application 24. The controller is further configured to process the sensor measurements to determine an emotional state or condition of the user in reaction to the content being viewed. For multiple users, the emotional state or condition is determined as to each individual user or viewer, as different users may have different reactions to comparable content. As referenced above, the sensor measurements are processed by the controller 22 so as to determine each user's emotional state or condition as the user is watching the audiovisual content, such as whether the user is happy versus sad, excited versus bored, attentive versus distracted, engaged versus irritated or angry, aroused versus repulsed, and so on.

As referenced above, the content modification system 20 also includes a user model database 60. The user model database may be stored in any conventional computer readable medium or memory as are known in the art, such as a volatile or non-volatile memory, hard drive or hard disk, and the like. For transferring between different modification systems, the user model database also may be stored on a removable storage device, such as a USB device, optical storage disc or device, flash memory or memory card, and the like.

Generally, the controller 22 is configured to execute the content modification application 24 to combine information from the user model database 60 with the results of the sensor measurements of the sensor module 30 to predict a user attitude toward the audiovisual content, such as whether the content being viewed is liked or disliked, and to what degree. In other words, the controller is configured to receive the sensor measurements and apply the sensor measurements to at least one user model to determine a prediction of user reaction to content.

For example, the system may determine that a viewer is afraid while watching a particular a movie scene. The determination of a "fear" reaction, however, by itself does not predict whether the scene, as well as comparable upcoming content, is (or will be) liked or disliked. If a particular viewer enjoys horror movies, a "fear" reaction would be indicative of a favorable reaction to the scene, insofar as a fear reaction to a horror movie is the desired effect of such content. In contrast, if a user dislikes horror-type content, or if a fear reaction is determined as to a scene that perhaps is not intended to be scary (e.g., a young viewer becomes afraid during a scene that an adult actually may find humorous), the "fear" reaction would be indicative of an unfavorable attitude toward the content. As can be seen, therefore, a given emotional reaction may have a different meaning depending upon the user and content. The user model database 60, therefore, is employed in combination with the sensor measurements so as to predict whether upcoming content will be considered favorably or unfavorably based on the user reaction to the content being viewed. As further explained below, based on such predictions, the content may be modified so as to be tailored to the user's preferences in accordance with the user's reactions.

As seen in FIG. 3, the user model database 60 may include individual models 62 and default models 64. Generally, each individual model is specific to a corresponding individual user identity, and a default model is not specific to a corresponding individual user identity.

FIG. 5A is a schematic diagram depicting exemplary individual model entries 66 that would be within the individual model database 62. The individual models pertain to specific individuals. Accordingly, the individual model entries 66 may include a user profile 68 that includes identifying information for the specific individual. For example, the profile may include information such as the user's name, gender, age, and login information so the user can log in to modify the information in the user model. The user profile also may include an image or related data from which a user can be identified by the face detection camera as described above. The example of FIG. 5A includes two user profiles: John is a 34-year old man, and Betty is a 32-year old woman.

The individual model entries 66 further may include a section 70 of preferences and a section 72 of non-preferences. For example, John has a preference for action, horror, and comedy, while he has a non-preference of romance and "tear-jerker" content. Like John, Betty prefers action movies as well, but also likes romance. She has non-preferences for gory violence and profanity. Content characteristics that are not deemed either preferences or non-preferences may be considered by the system to be neutral characteristics, in which case likes versus dislikes would be more determined specifically on the user reaction and movie genre. It will be appreciated that the content of the individual model entries of the individual model database 62 can be far more extensive and myriad than depicted. The intent of the individual models is to capture the preferences and non-preferences of specific users. The more detailed the individual models, the more the content can be tailored to the user so as to maximize enjoyment of the content.

The preferences and non-preferences may be generated by a variety of mechanisms. For example, they may be inputted manually by logging into the system under a particular user profile. Additionally, preferences and non-preferences may be automatically generated based on user history of emotional reactions to like content. In exemplary embodiments, the content modification system may be linked to an external network such as the Internet or a cellular network. Such links may include links to social networking sites such as Facebook, Twitter, LinkedIn, and the like. Preferences and non-preferences, in the form of "likes" and "dislikes" and comparable indications on such sites may be accessed by the content modification system and incorporated into a corresponding individual model entry 66 for the user. Such preferences or non-preferences may be content specific, even scene specific within content, or may be more general indications of preferences or non-preferences by genre and the like. Additional network features are explained in more detail below.

In addition to preferences and non-preferences, the individual model entries 66 may include a prohibitions section 73. The prohibitions section 73 may include outright prohibitions from viewing certain kinds of content. For example, a user may employ the prohibitions section 73 to exert parental controls over a minor aged user to preclude such minors from viewing age-inappropriate content, such as graphic violence, inappropriate sexual content, or the like. In the above examples of FIG. 5A, the prohibition section is empty insofar as John and Betty are both adults.

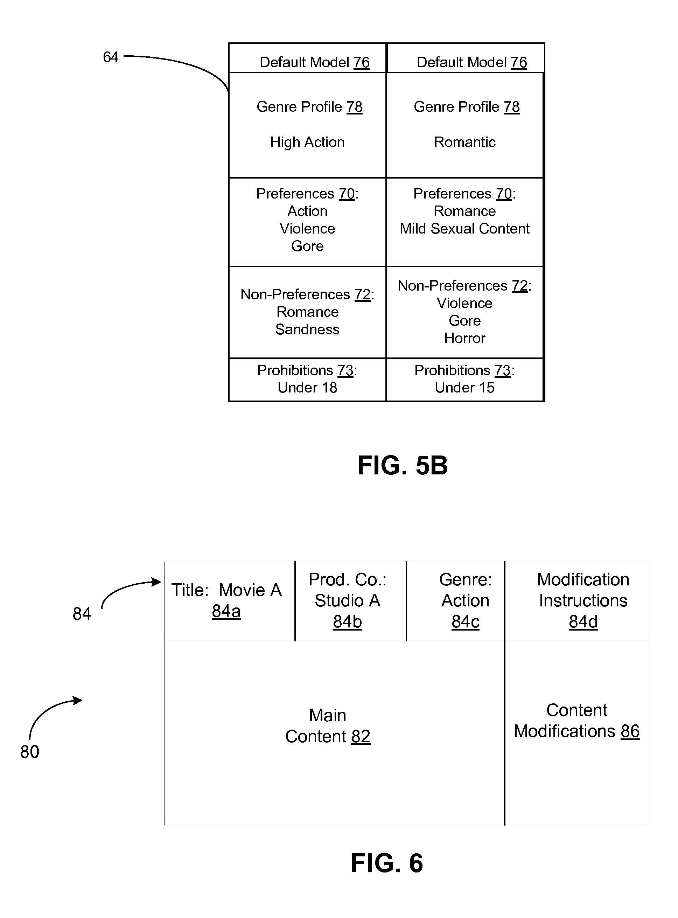

The individual models 62 are particularly suited to common users of the particular system, such as members of a household. Reactions of non-common or "guest" viewers, however, also can be determined by the system. For non-common users, as referenced above, the user model database 60 also may include default models 64. FIG. 5B is a schematic diagram depicting exemplary default model entries 76 that would be within the default model database 64. Because a default user is a non-common user, there is no user profile in the default entries 76. Instead the default entries 76 may include a genre profile 78. For example, FIG. 5B depicts two default entries, one having a high action profile and one having a romantic profile. The default profile also may include default entries 70 for preferences and 72 for non-preferences. For example, the high action profile may include preferences for violence, gore, and action, and non-preferences for romance and sadness. In contrast, the romantic profile may include preferences for romance and mild sexual content, and non-preferences for violence, gore, and horror. The default models also may include prohibitions 73. In the example default models of FIG 5B, each default model includes an age restriction. The specific default model may be selected manually by a user, or automatically by the type of content being accessed-e.g., the high action model would be automatically selected for a spy thriller and the romantic model would be automatically selected for a romantic comedy, and the like.

Returning to the individual model database 62, such models may be generated manually by a user utilizing any suitable input interface, such as by menu selection and/or key entries. In one embodiment, however, the individual models 62 may be generated automatically based on a learning process utilizing a usage history of a plurality of default models 64. For example, suppose a user is consistently watching content that invokes usage of high action and horror models, and favorable emotional reactions are measured for high action and scary scenes. In contrast, the romantic model is rarely invoked, and when romance scenes are present in action movies, the user's emotional reaction is negative. The system will build an individual model for that user based on action and horror preferences, with romance categories being deemed non-preferences. In this manner, the system can perform in a fully automated manner with little significant user input.

As referenced above, the controller 22 combines the emotional reaction of the user as determined from the sensor measurements, with the content of the appropriate user model, so as to generate a prediction as to whether the user will consider upcoming content favorable or non-favorable. The prediction generation is essentially a balance of the various factors of the system as applied to specific content being viewed. For example, a user model may have a preference for high action while romance is not preferred. However, a user may have a strong favorable emotional reaction to a romance scene within an action movie. Accordingly, the system may predict a user will have a favorable reaction to comparable upcoming romance scenes in this action movie, essentially determining that the weight of the emotional reaction supersedes the negative preference in the user profile. In this manner, the prediction system is highly flexible and specific to particular viewing circumstances.

Based on the prediction as to whether an upcoming content portion will be favored or disfavored, the controller is configured to apply a modification to the content portion while the content portion plays. In particular, the controller is configured to determine the content modification based on information contained in a media file associated with the content. In exemplary embodiments, content modification instructions are stored as part of the media file itself. For example, content modification instructions may be stored as part of the metadata of a media file, such as the metadata of an audiovisual file.

FIG. 6 is a schematic block diagram that represents portions of an exemplary media file 80, such as an audiovisual content file for a movie, telephone show, other digital video, or the like. Although the system is described generally as being used with movies or telephone shows, it will be appreciated the system may be employed with any suitable media file or content. Media file 80 may include a main content portion 82, which in exemplary embodiments is the original content as created by the content producer in an unmodified form. Media file 80 also may include associated metadata fields 84, which provide various items of information about the content. In the depicted example, the metadata includes four exemplary metadata fields: title (84a), production company (84b), genre (84c), and modification instructions (84d). Media file 80 also may include content modifications 86, which include additional content that can be added or applied to the content portion 82 while the media file is being played back. It will be appreciated that the configuration of the media file 80 and associated metadata structure 84 is but an example and may be varied as to content and format.

At the outset, as referenced above the controller 22 also may extract metadata information as part of the prediction process. For example, whether a detected viewer reaction is commensurate or appropriate to the genre of the content (e.g., action), may be a pertinent factor in whether a favorable or unfavorable prediction is made.

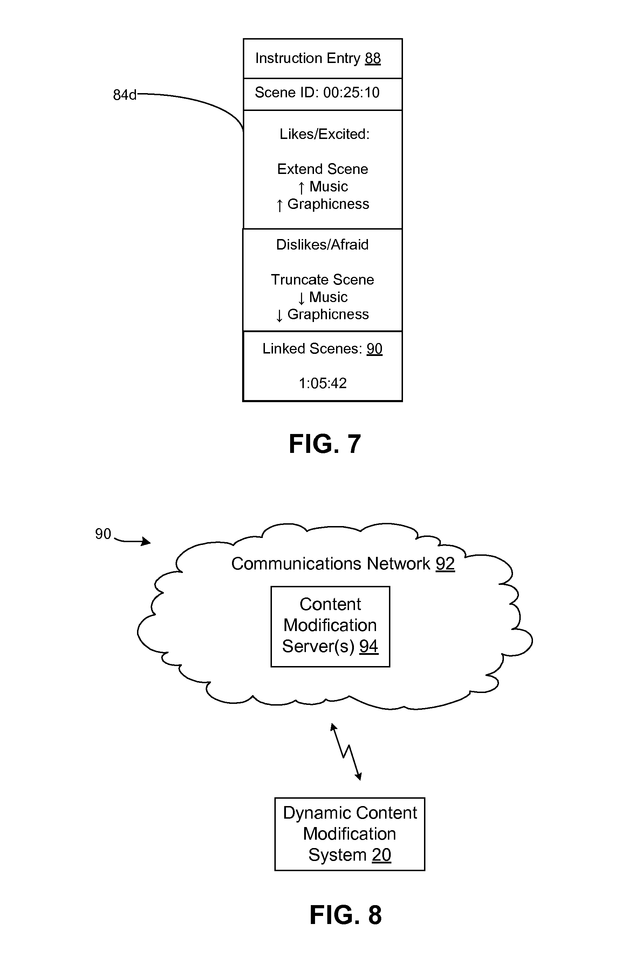

In the example of FIG. 6, the genre of the movie is action. FIG. 7 is a schematic block diagram depicting additional details for the modification instructions 84d of the metadata for the media file of FIG. 6. In the example of FIG. 7, instruction entries 88 of the metadata modification instructions may include a scene identification (Scene ID) for a scene in a particular point in the content. In this example, the Scene ID refers to a time within the content (hour:min:sec), although other types of scene identifying information may be used for the Scene ID. The instruction entry 88 also may include associations between a prediction/reaction and a corresponding modification or set of modifications to the content. For example, in FIG. 7 one entry of the modification instructions is for an action scene with a prediction and reaction of "likes/excited". A set of corresponding modifications may be "extend scene, ↑ music, ↑ graphicness". In other words, when a user is watching an action scene and has an excited reaction, the system predicts comparable content or scenes will be liked. In response, based on the modification instructions such liked scene can be extended, the music volume increased, and the graphical nature or intensity of the action may be increased. To the extent content may be added to the original content, such as by extending a scene, any additional content may be extracted from the content modifications section 86 of the media file for playback in addition to the original content 82.

As another example in FIG. 7, another instruction entry 88 of the modification instructions for the above action scene is a prediction and reaction of "dislikes/afraid". A set of corresponding modifications may be "truncate scene, ↓ music, ↓ graphicness". In other words, when a user is watching an action scene and has an "afraid" reaction, the system predicts comparable content or scenes will be disliked. In response, based on the modification instructions comparable disliked scenes can be truncated or shortened, have the music volume decreased, and the graphical nature or intensity of the action decreased. It will be appreciated that FIG. 7 represents an example, and the combinations of predictions, user emotional reactions or states, and content modifications are vastly myriad. Any suitable combinations of comparable parameters may be employed.

The modification instructions 84d of the movie file metadata may also include a "linked scenes" section 90. A linked scene is another second scene that must also be modified for consistency when a first scene is modified. For example, if content is added in which a particular character is killed, for consistency such character must not be present in any subsequent scenes. The controller 22 may read any linked scenes identifications from the movie file metadata, and apply commensurate content modifications to any linked scene such that the content remains consistent throughout the entirety of the viewing. In this particular example, a linked scene is identified by a time of when the scene falls within the content. For example, the linked scene entry of "1:05:42" indicates a linked scene begins at one hour, five minutes, and forty-two seconds into the content. It will be appreciated that other forms of linked scene identification may be employed.

The controller is configured to determine a content modification to a playback of the content based on the prediction. In the exemplary operation of the system being described, the system controller 22 determines the appropriate modification instructions and extracts the modification instructions 84d from the metadata of the media file. The controller is further configured to a cause a content reproduction device to play back the content in a manner that incorporates the determined content modification. As referenced above, such modified playback may include extracting additional content portions from content modifications section 86 of the media file, and incorporating such additional content into the playback. Referring back to FIG. 3, the metadata instructions and any related added content may be extracted, and the content modifications outputted to a playback device (such as the optical disc player or satellite/cable box depicted in FIG. 2) over a dedicated output interface 45 of the content medication system 20. In a wireless system, such extraction and output may be performed via a wireless interface 43 of the content medication system 20.

The following description sets forth certain examples of the operation of the content modification system 20 in accordance with the above. It will be appreciated that the following examples are provided for illustrative purposes and not intended to limit the scope of the invention. Numerous variations of the described examples may be employed.

In a first example, John is associated with an individual model as depicted in FIG. 5A as described above. John begins watching an action movie, and a high action scene commences. A face detection camera confirms John's identity so as to access his individual model from the model database. As the high action scene progresses, the face detection camera reveals that John appears highly attentive to the scene. His pupils are dilating and it is detected that his viewpoint is fixated to the display without any significant deviation. Photoplethysmography measurements from a light emitter and additional remote camera are processed by the sensor module processor, and calculations indicate a rise in John's heart rate and blood pressure, and skin GSR measurements indicate a measurable increase in perspiration. The controller processes the various measurements of the sensor module and determines that John is experiencing an excited reaction to the scene.

The controller then accesses John's individual model in the user model database. John's model indicates that action is one of his preferences. The controller also may read from the metadata associated with the media file that the scene is an action scene, which confirms that John's excited state is an appropriate reaction to the scene. Based on John's excited state, his preference for action, and the nature of the scene being an action scene, the controller predicts that John's would enjoy additional high action content. The controller, therefore, extracts appropriate content modification instructions from the metadata of the movie file. Based on such instructions, the controller causes a playback with increased volume of the music and special effects of the scene. In addition, the modification instructions indicate five minutes of content are available to add to the scene, which are contained in the content modifications portion of the movie file. The controller, in turn, causes the upcoming action to be modified in playback to have increased music and special effects volume. Furthermore, the additional five minutes is added to the playback of the scene.

In addition, the controller reads from the media file metadata that there are linked scenes based on the additional content. It seems additional buildings are destroyed in the scene by virtue in the added five minutes of content, and future scenes of the same locality are modified to incorporate such destruction so that the content remains consistent in view of the modifications.

In a second example, Betty is watching the same action movie instead of John. Betty is associated with an individual model as depicted in FIG. 5B as described above. Because Betty, like John, has a preference for action, the system initially operates comparably as above with respect to John. Betty, however, also has a non-preference for gory violence. At one point, the movie scene includes violence of a relatively extreme graphic nature. The elements of the sensor module indicate that Betty's heart rate and blood pressure increase further beyond ordinary excitement, as does her perspiration. Furthermore, the face detection camera indicates that she closes her eyes and her viewpoint moves away from looking at the display. Her hands are detected by the camera as partially covering her face. The controller, therefore, determines that Betty's reaction has changed to revulsion of the scene, and coupled with her non-preference for gory violence, the controller predicts Betty will no longer consider as favorable the upcoming portions of the scene. Based on such prediction, the controller extracts a modification instruction from the metadata of the movie file to terminate the scene earlier than in the original form of the content. The controller, in turn, causes the playback to occur with the referenced scene terminated early.

In a third example, both Betty and John are watching the action movie. Accordingly, the processor of the sensor module is configured to delineate the sensor measurements of John versus the sensor measurements of Betty. In one exemplary embodiment, one of the users can be deemed the "lead user", in this case John or Betty, and the controller will determine and process content modifications based on the reactions of the lead user.

Preferably, however, the controller is configured to determine modifications based on the combined reactions of both users. In such circumstances, the controller is configured to receive the sensor measurements for each respective user and apply the sensor measurements to a corresponding user model for each respective user to determine a prediction of a reaction to content for each respective user. In this manner, the controller balances the reactions of the multiple users so as to maximize the enjoyment of the group of viewers as a whole. For example, both John and Betty generally have a preference for action. Accordingly, both users may enjoy increased volume of the music and special effects, and also may enjoy an extension of the action scene. In consideration of the Betty's revulsion to particularly graphic and gory content, however, such highly graphic content is toned down in upcoming portions of the content (e.g., a less gory version is played back) to accommodate this specific aspect of Betty's user model. As a result, the content is modified in a manner that attempts to maximize the enjoyment of the users as a group-e.g., the music and special effects are enhanced and the action scene is extended, but the level of gore is reduced.

In a fourth example, Bobby is ten years old. His parents have entered into his user model a prohibition from viewing content beyond a minimal sexual nature. Bobby begins watching a movie that in most respects may be considered appropriate viewing for Bobby, but two scenes are of a sexual nature that exceeds the scope of the prohibition in Bobby's user model. When Bobby begins viewing the movie, the controller identifies Bobby as the viewer based on the images detected by the face detection camera. The controller then accesses the prohibition in Bobby's user model, and detects the sexual nature of an upcoming scene from the metadata of the movie file. The combined "sexual nature/prohibition" is associated in the metadata with a modification instruction to delete the scene. The controller reads such modification instruction from the metadata and causes the playback of the movie to proceed without the sexual content.

As indicated above, the described examples are provided for illustrative purposes of the operation of the content modification system 20, and are not intended to limit the scope of the invention. Numerous variations of the described examples may be employed.

In the embodiments described above, the content modification system is described as being a unitary or substantially unitary device, in which the various components are present in a single location, such as the living room of a house. In other exemplary embodiments, one or more components of the content modification system may be external and accessed over a long range network, such as over a cellular network or the Internet.

Referring to FIG. 8, the dynamic content modification system 20 may be configured to operate as part of a communications system 90. The system 90 may include a communications network 92 having a server 94 (or servers) for managing communications, transmitting data, carrying out any other network functions. The server 94 can communicate content modifications along with other communications via a transmission medium. The transmission medium may be any appropriate device or assembly, including, for example, a communications tower (e.g., a cell tower), another mobile telephone, a wireless access point, a satellite, Wi-Fi network, etc. Portions of the network may include wireless transmission pathways. The network 92 may support the communications activity of communication devices. As will be appreciated, the server 94 may be configured as a typical computer system used to carry out server functions and may include a processor configured to execute software containing logical instructions that embody the functions of the server 94 and a memory to store such software and any related databases.

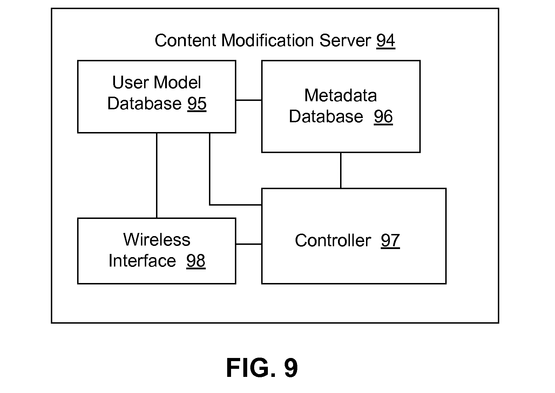

In one embodiment, the server 94 may operate as a content modification server to perform content modification function as part of the content modification system. FIG. 9 is a schematic block diagram depicting operative portions of an exemplary content modification server 94 in accordance with embodiments of the present invention. In such embodiments, the server 94 is particularly suitable for storing database aspects of the system. For example, the server 94 may include a user model database 95 comparable to the user model database 60 above. In exemplary embodiments, metadata of the media files may be stored in the server in a distinct metadata database 96, which would include the content modification instructions comparable to content modification instruction 84d as described above.

In this networked embodiment, the server 94 also may include a controller 97 and wireless interface 98. The sensor measurements may be received by the wireless interface 42 of the sensor module 30, and in turn be transmitted from the wireless interface 42 to the server wireless interface 98 of the server. The server controller 97 is configured perform the analysis described above utilizing the networked user model database 95 so as to determine appropriate modification instructions from the metadata database 96. The modification instructions may then be transmitted back to the local components of the content modification system 20 via the wireless interface 42, and the controller 22 may implement the received content modification instructions to cause a modified playback of the content.

In networked embodiments, functionality may be distributed over the network components in different ways. In one exemplary embodiment, the controller is located locally, such as in a user's home, as in the above descriptions. The controller is configured to apply the sensor measurements to the at least one user model by accessing the at least one user model from the server over the wireless interface. The controller further is configured to determine the content modifications based on information contained in metadata of a media file associated with the content as accessed also via the wireless interface 43 (which may be a unitary component with the wireless interface 42 of the sensor module described above) and wireless interface 98 of the server. The server includes the metadata database containing the content modification information, and the controller is configured to determine the content modification by accessing the metadata database from the server over the wireless interfaces 43 and 98 of the networked components.

In another exemplary embodiment, the controller functionality may be performed at the server level by the server controller 97. The server controller is configured to receive the sensor measurements over the wireless interface and apply the sensor measurements to at least one user model stored by the server to determine the prediction of a user reaction to content. The server controller further is configured to determine a content modification to a playback of the content based on the prediction and to transmit the determined content modification to the local controller in the user's home over the wireless interface. The local controller is then configured to a cause a content playback device to play back the content in a manner that incorporates the determined content modification.

Although the invention has been shown and described with respect to certain preferred embodiments, it is understood that equivalents and modifications will occur to others skilled in the art upon the reading and understanding of the specification. The present invention includes all such equivalents and modifications, and is limited only by the scope of the following claims.

## Claims

1. A dynamic content modification system (20) for dynamically modifying content playback based on a user reaction, the system comprising:
a sensor module (30) configured to receive a plurality of sensor measurements of at least one user;
a user model database (60) including a plurality of user models associated with content preferences; and
a controller (22), wherein:
the controller is configured to receive the sensor measurements and apply the sensor measurements to at least one user model to determine a prediction of a user reaction to content; and
the controller is configured to determine a content modification to a playback of the content based on the prediction.

2. The content modification system (20) of claim 1, wherein the controller (22) is further configured to a cause a content reproduction device (14) to play back the content in a manner that incorporates the determined content modification.

3. The content modification system (20) of any of claims 1-2, wherein the sensor module (30) comprises a plurality of sensor devices (32, 34, 36, 38).

4. The content modification system (20) of claim 3, wherein the plurality of sensor devices includes at least one of a face detection camera (32), a motion sensor (34), and a photoplethysmography measuring system (52, 54).

5. The content modification system (20) of claim 3, wherein the plurality of sensor devices includes at least one of a headset (44) worn by the user, a probe sensor (52) worn by the user, and a remote control device (56) operated by the user.

6. The content modification system (20) of any of claims 1-5, wherein:
the at least one user is a plurality of users;
the sensor module (30) is configured to distinguish sensor measurements associated with each respective user;
the controller (22) is configured to receive the sensor measurements for each respective user and apply the sensor measurements to a corresponding user model for each respective user to determine a prediction of a reaction to content for each respective user; and
the controller is configured to determine a content modification to a playback of the content based on one or more of the user predictions.

7. The content modification system (20) of any of claims 1-6, wherein the user model data base (60) contains at least one of an individual model (66) that is specific to a corresponding individual user, and a default model (76) that is not specific to a corresponding individual user.

8. The content modification system (20) of claim 7, wherein the individual model (76) includes a user profile (68) for the corresponding individual user.

9. The content modification system (20) of any of claims 1-8, further comprising:
a wireless interface (43), and
a server (94) storing the user model database (95);
wherein the controller (22) is configured to apply the sensor measurements to the at least one user model by accessing the at least one user model from the server over the wireless interface.

10. The content modification system (20) of claim 9, wherein:
the controller (22) is configured to determine the content modification based on information contained in metadata (84) of a media file (80) associated with the content;
the server (94) includes a metadata database (96) containing the content modification information; and
the controller is configured to determine the content modification by accessing the metadata database from the server over the wireless interface (43).

11. The content modification system (20) of any of claims 1-8, further comprising:
a wireless interface (43), and
a server storing (94) the user model database (95) and including a server controller (97); wherein:
the server controller is configured to receive the sensor measurements over the wireless interface and apply the sensor measurements to at least one user model to determine the a prediction of a user reaction to content;
the server controller is configured to determine a content modification to a playback of the content based on the prediction and to transmit the determined content modification to the controller (22) over the wireless interface; and
the controller is further configured to a cause a content playback device (14) to play back the content in a manner that incorporates the determined content modification.

12. A content reproduction system (10) comprising:
the content modification system (20) of any of claims 1-11; and
a content reproduction device (14);
wherein the controller (22) is further configured to a cause the content reproduction device to play back the content in a manner that incorporates the determined content modification.

13. A method of dynamically modifying content playback based on a user reaction comprising the steps of:
receiving a plurality of sensor measurements of at least one user;
applying the sensor measurements to at least one user model to determine a prediction of a user reaction to content; and
determining a content modification to a playback of the content based on the prediction.

14. The method of claim 13, further comprising causing a content reproduction device (14) to play back the content in a manner that incorporates the determined content modification.

15. The method of any of claims 13-14, wherein the at least one user is a plurality of users, the method further comprising;
receiving the plurality of sensor measurements from the plurality of users;
distinguishing sensor measurements associated with each respective user;
applying the sensor measurements of each respective user to a corresponding user model for each respective user to determine a prediction of a reaction to content for each respective user; and
determining a content modification to a playback of the content based on one or more of the user predictions.
